# EUROPÄISCHE PATENTANMELDUNG

(11) **EP 1 285 881 A1**
(43) Veröffentlichungstag der Anmeldung: **26.02.2003**
(21) Anmeldenummer: 02017476.9
(22) Anmeldetag: 05.08.2002
(51) Int. Cl.: C01G 25/02

(54) **Nanoskaliges pyrogen hergestelltes Yttrrium-Zirkon-Mischoxid**

(30) Priorität: 06.08.2001 DE 10138573
(71) Anmelder: Degussa AG, 40474 Düsseldorf (DE)
(72) Erfinder: Katusic, Stipan, 65779 Kelkheim (DE); Michael, Günther, Dr., 63791 Karlstein (DE); Deller, Klaus, Dr., 63512 Hainburg (DE); Hennig, Thomas, Dr., 63571 Gelnhausen (DE); Reinhart, Susanne, 65934 Frankfurt (DE); Tietze, Andrea, 60388 Frankfurt (DE)

(57) **Zusammenfassung**

Nanoskaliges, pyrogen hergestelltes, Yttrium-Zirkon-Mischoxid, welches eine BET-Oberfläche zwischen 1 und 600 m²/g, einen Gesamtchloridgehalt von weniger als 0,05 Gew.-% und beim Lagern keine Umwandlung in die monokline Phase aufweist, wird hergestellt, indem man Yttrium- und Zirkon-Verbindungen zerstäubt und in einer Flamme umsetzt. Das Mischoxid kann als keramischer Grundstoff eingesetzt werden.

## Beschreibung

Die Erfindung betrifft nanoskaliges pyrogen hergestelltes Yttrium-Zirkon-Mischoxid, ein Verfahren zur seiner Herstellung, sowie seine Verwendung

Es ist bekannt, pyrogene Oxide sowie Mischoxide durch Flammenhydrolyse von verdampfbaren Metallchloriden, beziehungsweise Metalloidchloriden, zu erzeugen (Ullmanns Enzyklopädie der technischen Chemie, 4. Auflage, Band 21, Seite 44 (1982)).

Ferner ist ein Verfahren zur Herstellung von nanoskaligen pyrogen hergestellten Oxide und/oder Mischoxide von Metallen und/oder Metalloiden bekannt, welches dadurch gekennzeichnet ist, dass man metallorganische und/oder metalloidorganische Stoffe, gegebenenfalls in einem Lösungsmittel gelöst, gegebenenfalls in einer Flamme, bei Temperaturen oberhalb von 200 °C in die Oxide umwandelt. Die Edukte können metalloid- und/oder metallorganische Reinstoffe oder beliebige Mischungen derselben darstellen oder als Lösungen in organischen Lösungsmitteln zum Einsatz kommen (EP 001 07 237.0-2111).

Nach diesem Verfahren hergestelltes Zirkonoxid hat den Nachteil, dass sich die ursprüngliche tetragonale Phase schon beim normalen Lagern bereits nach einem Monat in die monokline Phase umlagert. Diese Umwandlung geht mit einer Volumenausdehnung parallel. Da Formkörper bei diesem Prozess zerstört werden, scheidet die Verwendung dieser Produkte in keramischen Anwendungen aus.

Es besteht somit die Aufgabe nanoskaliges pyrogen hergestelltes Zirkonoxid herzustellen, welches diese Nachteile nicht aufweist.

Gegenstand der Erfindung ist nanoskaliges, pyrogen hergestelltes Yttrium-Zirkon-Mischoxid, welches eine BET-Oberfläche zwischen 1 und 600 m²/g und einen Gesamtchloridgehalt von weniger als 0,05 Gew.-%, vorzugsweise weniger als 0,02 Gew.-%, und beim Lagern bei Raumtemperatur und selbst beim Glühen (ca. 1000°C) keine Umwandlung in die monokline Phase aufweist.

Das erfindungsgemäße Yttrium-Zirkon-Mischoxid weist eine stabile tetragonale Phase auf.

Unter nanoskaligen Yttrium-Zirkon-Mischoxiden werden solche mit einer Teilchengröße von gleich oder kleiner 100 nanometer verstanden.

Ein weiterer Gegenstand der Erfindung ist ein Verfahren zur Herstellung des nanoskaligen pyrogen hergestellten Yttrium-Zirkon-Mischoxides, welches dadurch gekennzeichnet ist, dass man Yttrium-Verbindungen und Zirkon-Verbindungen gegebenenfalls in einem Lösungsmittel gelöst oder dispergiert, zerstäubt und in einer Flamme, vorzugsweise einer Knallgasflamme, bei Temperaturen oberhalb 200 °C in das Yttrium-Zirkon-Mischoxid umwandelt.

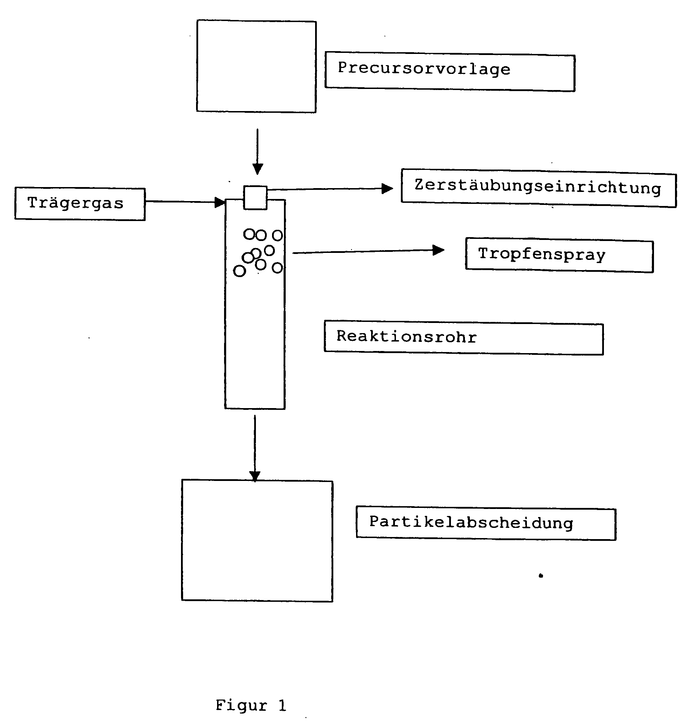

Das erfindungsgemäße Verfahren ist schematisch in Figur 1 dargestellt.

Geeignete Verbindungen des Yttriums und des Zirkons können in flüssiger Form als sehr fein verteiltes Spray einem Hochtemperatur-Reaktionsraum zugeführt werden, wobei in dem Hochtemperatur-Reaktionsraum, der vorzugsweise als geschlossenes Strömungsrohr ausgebildet ist, bei Temperaturen oberhalb von 200 °C die Partikelbildung erfolgen kann, wobei als Trägergas dem Hochtemperatur-Reaktionsraum inerte oder reaktive Gase zusätzlich zugeführt werden können und die Gewinnung der Pulver durch bekannte Methoden der Gas-Feststofftrennung mittels Filter, Zyklon, Wäscher oder anderen geeigneten Abscheidern erfolgen kann.

Hierzu können Lösungen von metallorganischen und/oder metalloid-organischen Stoffen (Precursor) in organischen Lösungsmitteln oder auch die reinen Stoffe (Precursor), gegebenenfalls in einer Flamme, bei höheren Temperaturen, gegebenenfalls oberhalb 200 °C, zu den Oxiden umgewandelt werden.

Als Precursor können Verbindungen des Typs MeR eingesetzt werden, wobei R einen organischen Rest, wie beispielsweise Methyl, Ethyl, Propyl, Butyl, oder die entsprechende Alkoxyvarianten oder auch ein Nitration darstellt.

Als Lösungsmittel können organische Lösungsmittel, wie Alkohole, wie zum Beispiel Propanol, n-Butanol, isoPropanol, und/oder Wasser eingesetzt werden.

Das Zirkon kann weiterhin in Form einer wässrigen Dispersion des Zirkondioxides der Flamme zugeführt werden.

Der Precursor kann mit einem Druck von 1 bis 10000 bar, bevorzugt von 2 bis 100 bar zugeführt werden.

Die Zerstäubung des Precursors kann mittels Ultraschallvernebler durchgeführt werden.

Die Temperatur kann mindestens 200 °C für amorphe Teilchen und kompakte Kugeln betragen.

Bei einer Temperatur von 1800 °C bis 2400 °C können feine Teilchen erzielt werden.

Ein Vorteil des erfindungsgemäßen Verfahrens ist, dass die Precursor nicht gasförmig, sondern flüssig in die Brennkammer eingeführt werden können. Dabei kann durch mindestens eine Einstoffdüse bei Drücken bis zu 10000 bar ein sehr feines Tropfenspray (mittlere Tropfengröße je nach Druck in der Düse zwischen <1-500 µm) erzeugt werden, welches dann verbrennt und dabei das Yttrium-Zirkon-Mischoxid als Feststoff erzeugt.

Weiterhin kann mindestens eine Zweistoffdüse bei Drücken bis zu 100 bar eingesetzt werden.

Die Tropfenerzeugung kann durch Verwendung einer oder mehrerer Zweistoffdüsen erfolgen, wobei das bei der Zweistoffzerstäubung eingesetzte Gas reaktiv oder inert sein kann.

Bei Verwendung einer Zweistoffdüse ergibt sich der Vorteil, dass die Tropfen mit einem Gasstrahl erzeugt werden. Dieser Gasstrahl kann Sauerstoff oder Stickstoff enthalten. Dadurch kann eine sehr intensive Vermischung der Oxidationsmittel mit dem Precursor erreicht werden. Es ist auch eine zusätzliche Brennstoffzufuhr in unmittelbarer Umgebung der Tropfen möglich, falls der Precursor nicht reaktiv, beziehungsweise der Dampfdruck des Precursor nicht hoch genug ist, um eine schnelle Reaktion zu gewährleisten.

Durch die Verwendung von metallorganischen Precursoren in Lösungsmitteln können homogene Lösungsmittelgemische aus verschiedenen Verbindungen der Formel MeR (Precursor) in beliebigen Konzentrationsverhältnissen einfach hergestellt und bevorzugt in flüssiger Form einer Flamme zugeführt werden, um die entsprechenden chloridarmen pyrogenen Mischoxide zu erhalten. Mit dem erfindungsgemäßen Verfahren werden Yttrium-Zirkon-Mischoxide, die vorher wegen stark unterschiedlichem Verdampfungsverhalten der Rohstoffe schlecht, beziehungsweise nicht synthetisierbar waren, leicht zugänglich.

Ein weiterer Vorteil des erfindungsgemäßen Verfahrens ist, dass man den flüssigen Precursor nicht nur mit anderen flüssigen Precursoren mischen kann, sondern gegebenenfalls auch feine Partikel, wie zum Beispiel pyrogene Oxide, wie Zirkonoxid in dem Precursor dispergieren und dadurch bei der Reaktion ein Coating der in dem Precursor dispergierten Partikeln erhalten kann.

Die Umsetzung der Precursor zu den Oxiden kann bevorzugt in einer Knallgasflamme erfolgen. Außer Wasserstoff können weitere brennbare Gase, wie beispielsweise Methan, Propan, Ethan, eingesetzt werden.

Da die metallorganischen Precursoren selbst einen guten Brennstoff darstellen, ist ein weiterer Vorteil des erfindungsgemäßen Verfahrens darin begründet, dass man auf die Stützflamme gänzlich verzichten und somit beispielsweise Wasserstoff als teueren Rohstoff einsparen kann.

Ferner ist durch Variation der Luftmenge (für die Verbrennung) und/oder durch Variation der Düsenparameter eine Einflussnahme auf die Oxideigenschaften, beispielweise auf die BET-Oberfläche, möglich.

Das erfindungsgemäße pyrogen hergestellte Yttrium-Zirkon-Mischoxid kann als Füllstoff, als Trägermaterial, als katalytisch aktive Substanz, als Ausgangsmaterial zur Herstellung von Dispersionen, als Poliermaterial zum Polieren von Metall-, beziehungsweise Siliziumscheiben in der Elektronikindustrie (CMP-Anwendung), als keramischer Grundstoff für Gassensoren oder in der Brennstoffzelle beziehungsweise als Dentalwerkstoff oder zur Herstellung von Membranen, in der Kosmetikindustrie, als Additiv in der Silikon- und Kautschukindustrie, zur Einstellung der Rheologie von flüssigen Systemen, zur Hitzeschutzstabilisierung, in der Lackindustrie, als Farbpigment, als Wärmedämmmaterial, als Antiblockdingmittel verwendet werden.

### Beispiele

Als Zirkon-Precursoren werden Zr(NO₃)₄, Zr(O-n-C₃H₇)₄ oder Zirkonoxid-Sol in einer Wasserstofflamme entsprechend dem Verfahren wie in EP 001 07 237.0-2111 beschrieben umgesetzt.

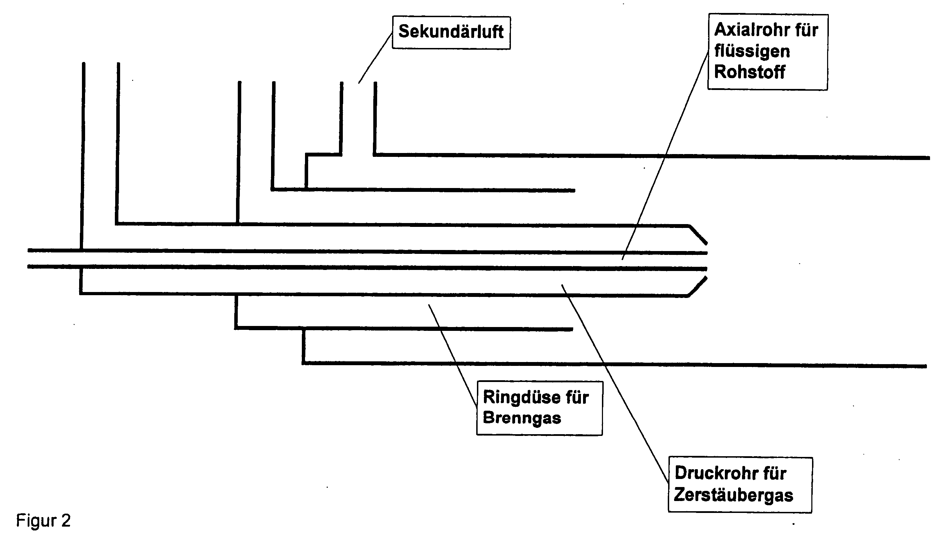

Die erfindungsgemäß verwendbare Brenneranordnung ist in Figur 2 schematisch dargestellt.

Die Lösungen mit den Zr-Procursoren und Y-Precursoren gemäß Tabelle 1 werden unter Stickstoffdruck mit Hilfe der Düse in das Reaktionsrohr verstäubt. Hier brennt eine Knallgasflamme aus Wasserstoff und Luft. Die Temperatur 0,5 m unterhalb der Flamme beträgt 800 bis 1000 °C. Das erhaltene Yttrium-Zirkon-Mischoxid wird in Filtern abgeschieden.

Die erhaltenen Produkte weisen die in der Tabelle 2 aufgeführten Daten auf.

**Tabelle 1**

| Beispiel | Zr-Precursor Gew.-% | Lösungsmittel für Zr-Precursor | Y-Precursor-Lösung Gew.-% | Lösungsmittel für Y-Precursor | Düse |
|---|---|---|---|---|---|
| 1 | Zr(NO₃)₄ 15 % | H₂O | Y(NO₃)₃ 10% | H₂O | 2-Stoff |
| 2 | ZrO₂ 30 % | H₂O | Y(NO₃)₃ 10% | H₂O/n-Propanol | 2-Stoff |
| 3 | Zr(O-n-C₃H₇)₄ 74 % | n-Propanol | Y (NO₃)₃ 10% | n-Propanol | 2-Stoff |
| 4 | Zr(O-n-C₃H₇)₄ 74 % | n-Propanol | Y(NO₃)₃ 10% | H₂O | 3-Stoff |
| 5 | Zr(O-n-C₃H₇)₄ 74 % | n-Propanol | Y(NO₃)₃ 10% | Methanol | 3-Stoff |

**Tabelle 2**

| Beispiel | BET m²/g a) RT b) 800°C | Phase a) RT b) 900°C während zwei Stunden | Y₂O₃ Gew.-%, bezogen auf das gesamte Mischoxid | Teilchengröße nm (TEM) | Cl-Gehalt % |
|---|---|---|---|---|---|
| 1 | a) 11 | a) tetragonal | 3,5 | 50 | 0,02 |
| | b)8,4 | b) tetragonal | | | |
| 2 | a) 2,4 | a) tetragonal | 5,9 | | 0,01 |
| 3 | a) 60 | a) tetragonal | 3,0 | 12 | 0,02 |
| | b) 29 | b) tetragonal | | | |
| 4 | a) 43 | a) tetragonal | 5,7 | 20 | 0,01 |
| | b) 31 | b) tetragonal | | | |
| 5 | a) 68 | a) tetragonal | 5,3 | 14 | 0,01 |
| | b) 42 | b) tetragonal | | | |

## Patentansprüche

1. Nanoskaliges, pyrogen hergestelltes, Yttrium-Zirkon-Mischoxid, welches eine BET-Oberfläche zwischen 1 und 600 m²/g und einen Gesamtchlorid von weniger als 0,05 Gew.-% und beim Lagern bei Raumtemperatur und selbst beim Glühen keine Umwandlung in die monokline Phase aufweist.

2. Verfahren zur Herstellung des nanoskaligen, pyrogen hergestellten, Yttrium-Zirkon-Mischoxides gemäß Anspruch 1, **dadurch gekennzeichnet, dass** man Yttrium-Verbindungen und Zirkon-Verbindungen gegebenenfalls in einem Lösungsmittel löst oder dispergiert, zerstäubt und in einer Flamme bei Temperaturen oberhalb von 200 °C in das Yttrium-Zirkon-Mischoxid umwandelt.

3. Verwendung des Yttrium-Zirkon-Mischoxides gemäß Anspruch 1, als Füllstoff, als Trägermaterial, als katalytisch aktive Substanz, als Ausgangsmaterial zur Herstellung von Dispersionen, als Poliermaterial zum Polieren von Metall-, beziehungsweise Siliziumscheiben in der Elektronikindustrie (CMP-Anwendung), als keramischen Grundstoff für Gassensoren oder in der Brennstoffzelle beziehungsweise als Dentalwerkstoff oder zur Herstellung von Membranen, in der Kosmetikindustrie, als Additiv in der Silikon- und Kautschukindustrie, zur Einstellung der Rheologie von flüssigem Systemen, zur Hitzeschutzstabilisierung, in der Lackindustrie, als Farbpigment, als Wärmedämmmaterial, als Antiblocking-Mittel.
